# EUROPEAN PATENT SPECIFICATION

(11) **EP 3 498 532 B1**
(45) Date of publication and mention of the grant of the patent: **24.01.2024**
(21) Application number: 18212101.2
(22) Date of filing: 12.12.2018
(51) Int. Cl.: B60N 3/02, B60R 11/02

(54) **VEHICLE COMPRISING A HANDLE**
FAHRZEUG MIT EINEM HANDGRIFF
VÉHICULE COMPRENANT UNE POIGNÉE

(30) Priority: 12.12.2017 IT 201700143092
(43) Date of publication of application: 19.06.2019
(73) Proprietor: Iveco S.p.A., 10156 Torino (IT)
(72) Inventor: BELLOSTA, Claudio, 10072 MAPPANO (TO) (IT)
(74) Representative: Studio Torta S.p.A.

(56) References cited:
- US-A1- 2012 080 465
- US-A1- 2012 168 482
- US-A1- 2013 307 470

## Description

### TECHNICAL FIELD

The invention relates to a vehicle comprising a handle, more in particular to a grab handle of a commercial or heavy vehicle.

### BACKGROUND ART

The need to charge electronic devices, such as smartphones, tablets or other known devices, is more and more urgent.

This need becomes even more urgent in vehicles; when driving a vehicle, indeed, the driver often needs to charge the aforesaid devices so as to have them completely charged at the end of the trip. Furthermore, nowadays it is common practice to use the smartphone as navigation system, a practice that requires the constant charge of the smartphone during the trip.

Chargers using the ISO sockets (for example, the cigarette lighter receptacle) available in the vehicle are known; however, these chargers need a specific adapter and a further support for the device being charged.

Therefore, there is the need to facilitate the charge of electric devices without the aid of adapters and/or dedicated supports.

Examples of supports for charging electronic devices and to support these latter on parts of a vehicles is disclosed in US2013307480 A1 which discloses a support usable in a steering of a motorbike, US20120080465 A1 which discloses a support usable in a steering wheel of a vehicle or US20120168482 A1 which discloses a support for a gear shift of a vehicle.

Document US20120080465 A1 discloses a vehicle according to the preamble of claim 1.

### DISCLOSURE OF INVENTION

The object of the invention is to solve the aforesaid problem in a simple and economic fashion.

In order to do so, the invention provides a vehicle comprising a handle according to the appended set of claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a perspective view of the inside of a vehicle comprising a handle according to the invention;

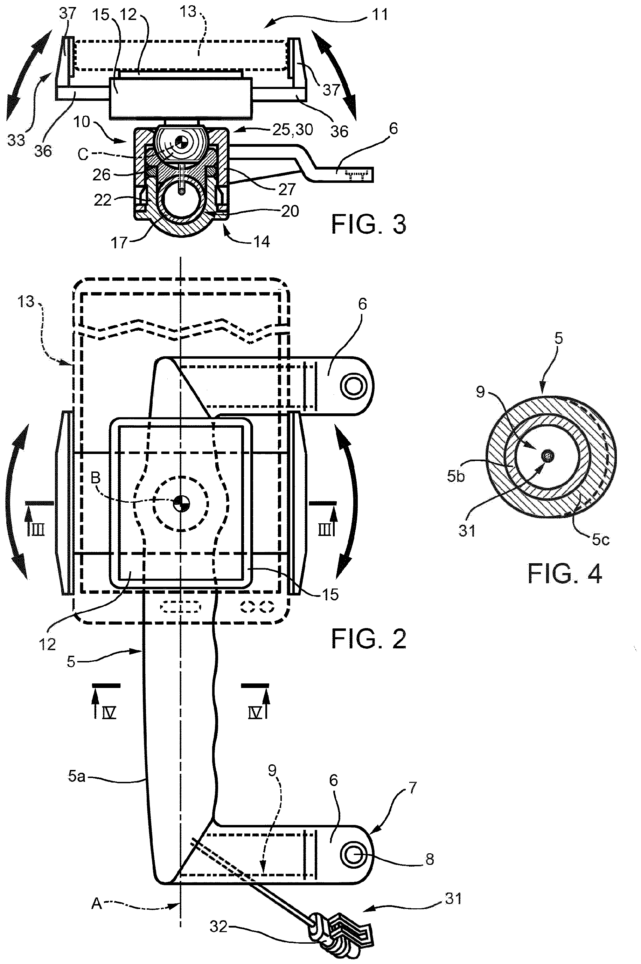

- figure 2 is a schematic front view of a handle according to the invention; and
- figures 3 and 4 are cross sections along lines III-III and IV-IV, respectively, of the handle of figure 2.

### BEST MODE FOR CARRYING OUT THE INVENTION

The description relates to an embodiment of a vehicle comprising a handle of the type discussed hereinafter.

Furthermore, the handle, despite being described hereinafter in relation to the inside of a commercial/heavy vehicle, can be used in any vehicle, such as a vehicle for off-road or agricultural applications.

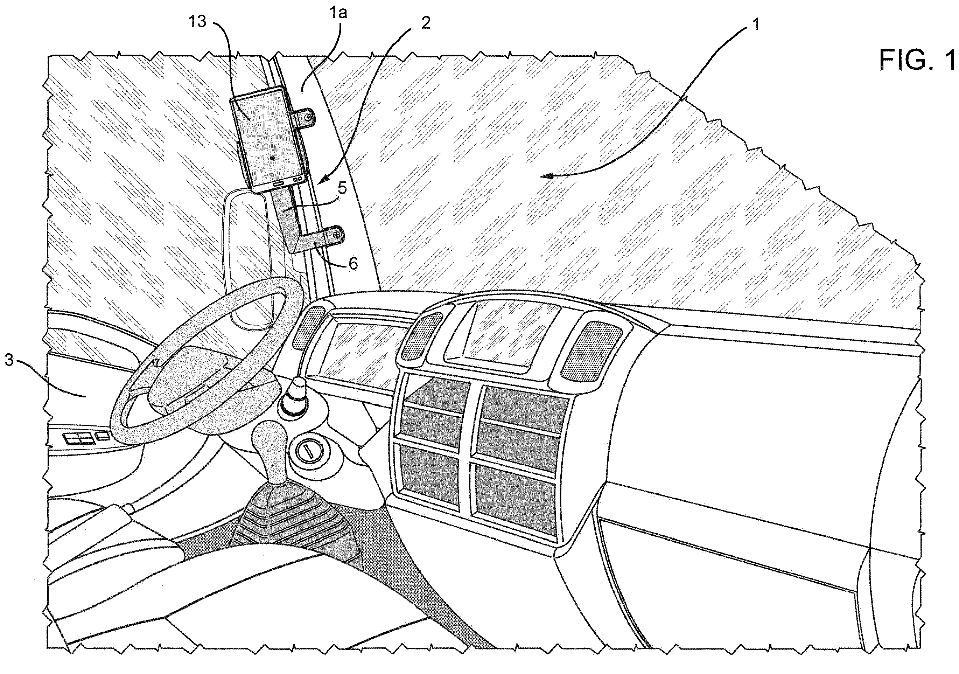

Figure 1 shows the inside 1 of a vehicle, according to the invention, for example a commercial or heavy vehicle, comprising known elements, such as a dashboard, the steering assembly, the gear lever, etc.

The inside 1 further accommodates a handle 2, which is arranged close to the opening of a door 3 of the vehicle and is configured to be grabbed by the driver in order to help him/her climb up and reach the inside 1 of the vehicle.

The handle 2 can have any shape, for example it can be substantially C-shaped with a constant section and comprise a straight portion 5 and a pair of transverse portions 6 projecting perpendicularly from the ends of the straight portion 5.

The handle 2 further comprises fixing means 7 to fix it to an inner wall 1a of the vehicle. For example, these fixing means 7 comprise holes 8 made in the end portions of the transverse portions 6 and configured to receive respective threaded elements configured to fix the handle 2 to the inner wall 1a.

According to the invention, the handle 2 further comprises charging means 10 for an electronic device 13 and handling means 11 configured to allow the charging means 10 to be positioned on the handle 2 in an adjustable manner.

In particular, the charging means 10 can comprise wireless charging means and comprise a plate 12, which is configured to permit the wireless charge and is housed on a dedicated support 15, which is connected to the handling means 11.

The handling means 11 can comprise a support body 14 comprising the elements described below.

The handling means 11 can comprise first handling means configured to allow the body 14 and, hence, said charging means 10 to slide along the straight portion 5 of the handle 2. In particular, said first means can comprise a guide 17, which has a shape that is complementary to an outer surface 5a of the straight portion 5 and is configured to slide on the latter with friction.

The handling means 11 can further comprise second handling means configured to allow the body 14 and, hence, said charging means 10 to rotate around the handle 2.

In particular, the second handling means can comprise a first hinge 20, which is configured to allow the body 14 to rotate around an axis A, which is parallel to a longitudinal axis of the straight portion 5. For example, said first hinge 20 can comprise a housing 22, which is configured to slide around the above-mentioned guide 17.

Moreover, the second handling means can further comprise a second hinge 25, which is configured to allow the body 14 to rotate around a first axis B, which is perpendicular to the longitudinal axis of the straight portion 5. For example, said second hinge 25 can be a ball 26, which is carried by the body 14, is connected to the support 15 and rolls relative to a housing 27. The housing 22 is advantageously connected to the housing 27.

Moreover, the second handling means can further comprise a third hinge 30, which is configured to allow the support 12 to rotate around a second axis C, which is perpendicular to the longitudinal axis of the straight portion 5. In the example described herein, said third hinge 30 can be - again - the ball 26, which is carried by the body 14, is connected to the support 15 and rolls relative to a housing 27.

At least the straight portion 5 of the handle 2 advantageously comprises a tubular metal core 5b, preferably with a constant and circular cross section, and a cover 5c, which is fixed on the outside of the tubular core 5b. The cover 5c can preferably be made of a plastic material, such as for example a finishing foam fixed on the outside of the tubular core 5b.

The tubular core 5b defines an inner cavity 9 configured to house electrical connection means 31 configured to electrically connect the plate 12 to a power source, so as to allow the electronic device 13 to be charged. Said electrical connection means 31 can advantageously be a plug 32 joining the plate 12 to a power source (not shown) of the vehicle and projecting from an opening (not shown) made in the handle 2.

Furthermore, the handle 2 comprises gripping means 35, which are configured to fix the electronic device 13 on the plate 12 in a removable manner. In particular, the gripping means 35 can comprise at least a pair of arms 36 laterally projecting relative to the support 15.

The arms 36 comprise containing walls 37 extending perpendicularly from a respective end portion thereof and facing one another. By adjusting the relative distance between the walls 37, i.e. by adjusting the projection of the arms 36 from the support 15, it is possible to define a lateral fixing of the electronic device 13.

The handle 2 works as follows.

The user can place the electronic device 13 on the plate 2 and fix it to the latter thanks to the gripping means 35. Indeed, by adjusting the opening defined between the walls 37, the device 13 can be laterally locked.

After the device 13 has been fixed on the plate 12, the body 14 can be moved along the handle 5 and/or rotated around at least one of the axes A, B, C described above depending on the use of the driver of the vehicle. The friction of the hinges 20, 25, 30 and of the guide 17 relative to the surface 5a allows the position chosen by the driver to be maintained even when the vehicle is moving.

Through a control, for example a button placed on the dashboard and/or any other known actuator, the user can activate the charge of the device 13 and, hence, the power, by flowing through the electrical connection means 31, reaches the plate 12, which charges the device 13 in a known manner through induction.

Owing to the above, the advantages of a vehicle comprising a handle according to the invention are evident.

A handle 2 comprising charging means 10 and handling means 11 allows manufacturers to obtain a charging device that increases the space available inside the vehicle 1; as a matter of fact, no more dedicated connectors and/or supports are needed.

Furthermore, the handle 2 disclosed above can be installed in replacement of known handles, provided that an electrical connection towards the electrical connection means 31 is subsequently established. Indeed, the handle 2 simply needs to be fixed by means of the fixing means 7 of the arms 6, which can be sized according to the needs.

Finally, the vehicle comprising a handle 2 according to the invention can be subjected to changes and variants, which, though, do not go beyond the scope of protection set forth in the appended claims.

## Claims

1. Vehicle comprising a handle (2) fixed to a wall defining an inner space of (1) said vehicle wherein said handle (2) comprises charging means (10) for electronic devices (13) and handling means (11) configured for positioning said charging means (10) on said handle (2) in an adjustable manner, **characterised in that** said handle (2) is hollow and comprises electrical connection means (31) housed inside said handle (2) configured to supply electrical energy to said charging means (10).

2. Vehicle according to claim 1, **characterised in that** said handling means (11) comprise first handling means configured to allow the movement of said charging means (10) along said handle (2) and second handling means configured for allowing the rotation of said charging means (10) around at least an axis (A; B; C) around said handle (2).

3. Vehicle according to claim 2, wherein said first handling means comprise a guide (17) frictionally sliding on an external surface (5a) of said handle.

4. Vehicle according to claim 2 or 3, wherein said second handling means comprise at least one of the following: a first hinge (20) configured for allowing the rotation of said charging means (10) around an axis (A) parallel to a longitudinal axis of said handle (2), a second hinge (25) configured for allowing the rotation of said charging means (10) around a first axis (B) perpendicular to said longitudinal axis of said handle (2), and a third hinge (30) configured for allowing the rotation of said charging means (10) around a second axis (C) perpendicular to said longitudinal axis of said handle (2).

5. Vehicle according to one of the previous claims, wherein said charging means (10) are wireless charging means.

6. Vehicle according to claim 5, wherein said wireless charging means comprise a charging plate (12) carried by a support (15) connected to said handling means (11).

7. Vehicle according to one of the previous claims, comprising a gripping means (35) configured to fix said electronic devices (13) onto said handle (2).

8. Vehicle according to claim 7, wherein said gripping means (35) are carried by said support (15) and comprise a pair of arms (36) comprising end walls (37) facing one another and configured to cooperate with said electronic devices (13), the distance between said walls (37) can be varied by adjusting the length of said arms (36) in respect to said support (15).

## Patentansprüche

1. Fahrzeug, umfassend einen Handgriff (2), der an einer Wand befestigt ist, die einen Innenraum (1) des Fahrzeugs begrenzt, welcher Handgriff (2) Lademittel (10) für elektrische Vorrichtungen (13) und Handhabungsmittel (11) umfasst, welche zur Positionierung der Lademittel (10) auf dem Handgriff (2) in einstellbarer Weise ausgebildet sind, **dadurch gekennzeichnet, dass** der Handgriff (2) hohl ist und elektrische Verbindungsmittel (31) umfasst, die innerhalb des Handgriffs (2) untergebracht sind und dazu ausgebildet sind, den Lademitteln (10) elektrische Energie zuzuführen.

2. Fahrzeug gemäß Anspruch 1, **dadurch gekennzeichnet, dass** die Handhabungsmittel (11) erste Handhabungsmittel umfassen, ausgebildet, um eine Bewegung der Lademittel (10) entlang des Handgriffs (2) zu ermöglichen, und zweite Handhabungsmittel, dazu ausgebildet, die Rotation der Lademittel (10) um zumindest eine Achse (A; B; C) um den Handgriff (2) herum zu ermöglichen.

3. Fahrzeug gemäß Anspruch 2, bei welchem die ersten Handhabungsmittel eine Führung (17) umfassen, die reibend auf einer äußeren Oberfläche (5a) des Handgriffs gleitet.

4. Fahrzeug gemäß Anspruch 2 oder 3, bei welchem die zweiten Handhabungsmittel zumindest eines der folgenden Mittel umfassen: ein erstes Scharnier (20), ausgebildet, um die Rotation der Lademittel (10) um eine Achse (A) parallel zu einer Längsachse des Handgriffs (2) zu ermöglichen, ein zweites Scharnier (25), ausgebildet, um die Rotation der Lademittel (10) um eine erste Achse (B) senkrecht zur Längsachse des Handgriffs (2) zu ermöglichen, und ein drittes Scharnier (30), ausgebildet, um die Rotation der Lademittel (10) um eine zweite Achse (C) senkrecht zur Längsachse des Handgriffs (2) zu ermöglichen.

5. Fahrzeug gemäß einem der vorhergehenden Ansprüche, bei welchem die Lademittel (10) kabellose Lademittel sind.

6. Fahrzeug gemäß Anspruch 5, bei welchem die kabellosen Lademittel eine Ladeplatte (12) umfassen, die von einem Träger (15) getragen wird, der mit den Handhabungsmitteln (11) verbunden ist.

7. Fahrzeug gemäß einem der vorhergehenden Ansprüche, umfassend ein Greifmittel (35), ausgebildet zur Befestigung der elektronischen Vorrichtungen (13) auf dem Handgriff (2).

8. Fahrzeug gemäß Anspruch 7, bei welchem die Greifmittel (35) von dem Träger (15) getragen werden und ein Paar Arme (36) umfassen, die Endwände (37) umfassen, die einander zugewandt sind und dazu ausgebildet sind, mit den elektronischen Vorrichtungen (13) zusammenzuwirken, wobei der Abstand zwischen den Wänden (37) durch Einstellen der Länge der Arme (36) bezüglich des Trägers (15) variiert werden kann.

## Revendications

1. Véhicule comprenant une poignée (2) fixée à une paroi définissant un espace interne (1) dudit véhicule dans lequel ladite poignée (2) comprend un moyen de charge (10) pour dispositifs électroniques (13) et un moyen de manipulation (11) configuré pour positionner ledit moyen de charge (10) sur ladite poignée (2) d'une manière ajustable, **caractérisé en ce que** ladite poignée (2) est creuse et comprend un moyen de connexion électrique (31) logé à l'intérieur de ladite poignée (2) configuré pour fournir de l'énergie électrique audit moyen de charge (10).

2. Véhicule selon la revendication 1, **caractérisé en ce que** ledit moyen de manipulation (11) comprend un premier moyen de manipulation configuré pour permettre le mouvement dudit moyen de charge (10) le long de ladite poignée (2) et le deuxième moyen de manipulation configuré pour permettre la rotation dudit moyen de charge (10) autour d'au moins un axe (A ; B ; C) autour de ladite poignée (2).

3. Véhicule selon la revendication 2, dans lequel ledit premier moyen de manipulation comprend un guide (17) coulissant par frottement sur une surface externe (5a) de ladite poignée.

4. Véhicule selon la revendication 2 ou 3, dans lequel ledit deuxième moyen de manipulation comprend au moins l'un des suivants : une première charnière (20) configurée pour permettre la rotation dudit moyen de charge (10) autour d'un axe (A) parallèle à un axe longitudinal de ladite poignée (2), une deuxième charnière (25) configurée pour permettre la rotation dudit moyen de charge (10) autour d'un premier axe (B) perpendiculaire audit axe longitudinal de ladite poignée (2), et une troisième charnière (30) configurée pour permettre la rotation dudit moyen de charge (10) autour d'un deuxième axe (C) perpendiculaire audit axe longitudinal de ladite poignée (2).

5. Véhicule selon l'une des revendications précédentes, dans lequel ledit moyen de charge (10) est un moyen de charge sans fil.

6. Véhicule selon la revendication 5, dans lequel ledit moyen de charge sans fil comprend une plaque de charge (12) portée par un support (15) raccordé audit moyen de manipulation (11).

7. Véhicule selon l'une des revendications précédentes, comprenant un moyen de préhension (35) configuré pour fixer lesdits dispositifs électroniques (13) sur ladite poignée (2).

8. Véhicule selon la revendication 7,
dans lequel ledit moyen de préhension (35) est porté par ledit support (15) et comprend une paire de bras (36) comprenant des parois d'extrémité (37) se faisant face et configurées pour coopérer avec lesdits dispositifs électroniques (13), la distance entre lesdites parois (37) peut être modifiée en ajustant la longueur desdits bras (36) par rapport audit support (15).
